# EUROPEAN PATENT SPECIFICATION

(11) **EP 3 127 323 B1**
(45) Date of publication and mention of the grant of the patent: **25.08.2021**
(21) Application number: 15773672.9
(22) Date of filing: 18.03.2015
(51) Int. Cl.: G03B 7/099, G06K 9/00, G06K 9/20, H04N 1/60, H04N 5/235, H04N 9/73, G03B 7/08, H04N 5/232

(54) **METHOD AND APPARATUS FOR CONTROLLING IMAGE CAPTURE**
VERFAHREN UND VORRICHTUNG ZUR STEUERUNG DER BILDAUFNAHME
PROCÉDÉ ET APPAREIL POUR COMMANDER UNE CAPTURE D'IMAGE

(30) Priority: 31.03.2014 CN 201410135688
(43) Date of publication of application: 08.02.2017
(73) Proprietor: Nokia Technologies Oy, 02610 Espoo (FI)
(72) Inventor: CHU, Weili, Beijing 100176 (CN); GUO, Fengyang, Beijing 100176 (CN)
(74) Representative: Berggren Oy
(86) International application number: PCT/FI2015/050178
(87) International publication number: WO 2015/150622

(56) References cited:
- CN-U- 202 309 887
- JP-A- 2004 343 315
- JP-A- 2008 182 369
- JP-A- 2008 205 922
- JP-A- 2011 085 829
- JP-A- 2013 207 721
- JP-B2- 5 061 968
- US-A1- 2008 231 726
- US-A1- 2009 015 689
- US-A1- 2010 110 368

## Description

### FIELD OF THE INVENTION

Embodiments of the present invention relate to the field of image processing, and more specifically relate to a method and apparatus for detecting environmental parameters so as to control image capture.

### BACKGROUND OF THE INVENTION

With the development of image capture and processing technologies, more and more user devices have a function of image capture. For example, currently, most portable mobile devices (e.g., mobile phone, personal digital assistant PDA, tablet computer, etc.) have been equipped with a camera capable of capturing images. When a user uses such a mobile device to capture an image, environmental parameters such as illumination and color temperature always vary with the environment, while such environmental parameters have a direct influence on image capture. For example, dependent on different environmental parameters, a camera needs to adjust its exposure time, sensor sensitivity, gains of different color channels, and/or automatic white balance processing, and the like. Otherwise, the captured image might be problematic, e.g., having an incorrect brightness or tone.

Conventionally, in order to adapt image capture in different environments, a user may be allowed to manually set camera parameters so as to guarantee that exposure time, photosensitivity, white balance and the like match the current environment. However, for a user, particularly for a common consumer, due to lack of expertise, it is a complex process to set camera parameters, and its accuracy cannot be guaranteed.

Another known manner is pre-setting and saving profiles for a plurality of typical environments for a user to select. For example, examples of such profile may include "highlight," "night," "automatic," etc. In use, a user may select a profile based on a specific environment so as to apply a corresponding environmental parameter during the image capturing process. However, it would be appreciated that pre-stored profiles always do not exactly match a particular environment where a user is located. Therefore, an image captured through applying preset environmental parameters defined in profiles cannot achieve an optimal quality yet.

In order to achieve adaptive processing to a captured image, it has been proposed to automatically detect illumination and color temperature in the environment. However, known methods have their own defects. For example, one solution is to detect white points in a scenario for automatic image processing such as white balance. However, when there is no apparent white object in the scene that can be used as a reference object, this method will become invalid.

JP2004343315A discloses an imaging apparatus having a first image pickup means for imaging an object, a second image pickup means for imaging the eyes of the photographer, and an eye white area calculating means for calculating the size of the white area of each of the eyes from information about the eyes imaged by the second imaging means. The shutter speed of the aperture function means is changed on the basis of temporal correlation of the value of the size of the white area of each of the eyes calculated by the eye white area calculating means.

JP2008182369 discloses a device capturing an image of an object by one camera and comprising a control unit detecting a face, an area of eyes and an eye's white area in that image of the object, if the face and the eye(s) exists. Then it detects color information on the white area. The control unit computes an adjustment value of white balance based upon the white of the object in the captured image, and uses the value to adjust the white balance of the image.

JP2013207721 discloses an image pickup device comprising a main camera, which takes a picture not including the photographer, a sub-camera, which takes a picture of the photographer, a face detection unit, which detects the face of the photographer from the image shot and extracts colors of the face, a storage which stores therein reference face color data and the color temperature of a light source, which are correlated to each other when stored, a color temperature estimation unit, which estimates the color temperature of the light source from the face color of the photographer, and a white balance correction processing unit, which corrects the white balance of the image shot by the main camera on the basis of the color temperature.

In view of the above, it is desirable in the art for a technical solution that can detect environmental parameters more accurately and effectively to control image capture.

### SUMMARY OF THE INVENTION

In order to address the above and other potential problems, the present invention provides a method and apparatus for controlling image capture.

In one aspect of the present invention, there is provided a method for detecting an environmental parameter for controlling image capture. The method comprises: obtaining eye information of a user of an electronic device using a first camera on the electronic device, the eye information obtained by the first camera includes a sclera color; detecting based on the sclera color an environmental parameter of an environment where the user is located based on
the eye information captured by the first camera, which environmental parameter is a color temperature; detecting a reference environmental parameter of the environment by the second camera from a shot scene, and which reference environmental parameter is a color temperature; comparing the environmental parameter and the reference environmental parameter, if the difference is lower than a predefined threshold, defining a predefined condition satisfied; and responsive to a predefined condition being satisfied, controlling image capture by a second camera on the electronic device at least in part based on the detected environmental parameter, and responsive to the predefined condition being unsatisfied, disable the environmental parameter detection by the first camera (136) during the image capture process of the second camera, the first camera and the second camera being located at different sides of the electronic device. Embodiments in this aspect further comprises a corresponding computer program product.

In another aspect of the present invention, there is provided an apparatus for detecting an environmental parameter for controlling image capture. The apparatus comprises: an eye information obtaining unit configured to obtain eye information of a user of an electronic device using a first camera on the electronic device; an environment detecting unit configured to detect based on the sclera color an environmental parameter of an environment where the user is located based on the eye information captured by the first camera and which environmental parameter is a color temperature; a second camera (137) configured to detect a reference environmental parameter of the environment from a shot scene, and which reference environmental parameter is a color temperature; an environmental parameter comparing unit configured to compare the environmental parameter and the reference environmental parameter, if the difference is lower than a predefined threshold, defining a predefined condition satisfied, and an image capture control unit configured to, responsive to a predefined condition being satisfied, control image capture by a second camera on the electronic device at least in part based on the detected environmental parameter, and if a predefined condition is defined to be unsatisfied, disable the environmental parameter detection by the first camera during the image capture process of the second camera, the first camera and the second camera being located at different sides of the electronic device.

It would be appreciated through the description below that according to embodiments of the present invention, while a user captures an image using a camera on an electronic device, other independent camera of the electronic device may be used to obtain eye information of the user. Because a human eye can provide stable reference information (e.g., color of sclera, pupil ratio, and the like) that can be used for environment detection, the environmental parameter, such as color temperature and luminance, of the environment where the user is located may be estimated based on the obtained eye information. Therefore, an environmental parameter estimated by a camera may be used to control other camera in image capture, e.g., performing automatic exposure and/or automatic white balance processing. In this way, an image with a higher quality can be achieved.

### BRIEF DESCRIPTION OF THE ACCOMPANYING DRAWINGS

The above and other objectives, features and advantages of embodiments of the present invention will become more comprehensible through reading the following detailed description with reference to the accompanying drawings. In the figures, several embodiments of the present invention are illustrated in an exemplary, rather than limitative, manner, wherein:
Fig. 1 shows a block diagram of an electronic device in which exemplary embodiments of the present invention may be implemented therein;
Fig. 2 shows a flow diagram of a method for detecting an environmental parameter for controlling image capture according to exemplar embodiments of the present invention;
Fig. 3 shows a flow diagram of a method for calibrating a predefined mapping between eye information and an environmental parameter for a specific user according to exemplary embodiments of the present invention;
Fig. 4A and Fig. 4B show a schematic diagram of calibrating a predefined mapping based on an offset vector according to exemplary embodiments of the present invention;
Fig. 5 shows a block diagram of an apparatus for detecting an environmental parameter to control image capture according to exemplary embodiments of the present invention.

In respective figures, same or corresponding reference numerals represent same or corresponding portions.

### DETAILED DESCRIPTION OF THE PREFERRED EMBODIMENTS

As summarized above and will be detailed below, one of main ideas of the present invention is that while a user uses a camera (for example, a rear camera) on an electronic device to capture an image, another separate camera (for example, a front camera) of the electronic device may be used to capture the eye information of the user. Because a human eye can provide stable reference information (for example, color of sclera, pupil ratio, and the like) that can be used for environment detection, the environmental parameter, such as color temperature and luminance, of the environment where the user is located may be estimated based on the obtained eye information. Therefore, an environmental parameter estimated by a camera may be used to control other camera in image capture, for example, performing automatic exposure and/or automatic white balance processing. In this way, an image with a higher quality can be achieved. Moreover, in some embodiments, personalized customization of environment detection may be achieved for different users, thereby further enhancing user experience. Note that the term "image" used in the context of the present disclosure includes not only a static image but also a dynamic image (i.e., video). Additionally, the term "image capture" used here not only includes the shooting process of the image, but also includes any post-processing procedure for the shot image.

Hereinafter, several exemplary embodiments shown in the drawings will be referenced to describe the principle of the present invention. It should be understood that these embodiments are described only for enabling those skilled in the art to better understand and then further implement the present invention, not intended to limit the scope of the present invention as defined by the claims in any manner.

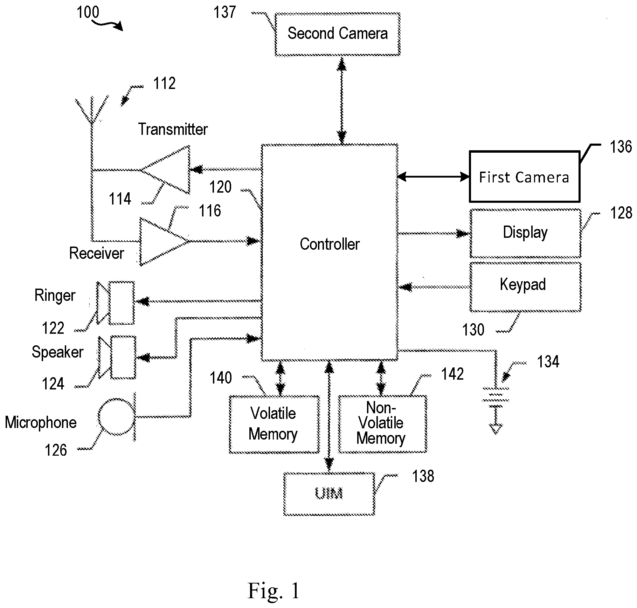

Reference is first made to Fig. 1, in which a block diagram of an electronic device 100 in which exemplary embodiments of the present invention may be implemented therein is presented. According to embodiments of the present invention, the electronic device 100 may be a portable electronic device such as a mobile phone. However, it should be understood that this is only exemplary and non-limitative. Other types of user device may also easily employ embodiments of the present invention, such as a personal digital assistant (PDA), a pager, a mobile computer, a mobile TC, a game device, a laptop computer, a camera, a video camera, a GPS, or other type of voice and text communication system.

The electronic device 100 may have a communication function. To this end, as shown in the figure, the electronic device 100 may comprise one or more antennas 112 operable to communicate with a transmitter 114 and a receiver 116. The electronic device 100 further comprises at least one processor controller 120. It should be understood that the controller 120 comprises circuits needed for implementing all functions of the electronic device 100. For example, the controller 120 may comprise a digital signal processor device, a microprocessor device, an A/D converter, a D/A converter and other support circuits. The control and signal processing functions of the electronic device 100 are distributed based on these devices' respective capabilities. The electronic device 100 may further comprise a user interface, e.g., a ringer 122, a speaker 124, a loudspeaker 126, a display, or a viewfinder 128 and a keypad 130, all of which are coupled to the controller 120.

In particular, the electronic device 100 comprises a first camera 136 and a second camera 137 for capturing static and/or dynamic images. According to embodiments of the present invention, the first camera 136 and the second camera 137 are located at different sides of the electronic device 100. For example, in some embodiments, the first camera 136 may be a front camera of the electronic device 100. In other words, it is located at the same side of the electronic device 100 as the display or viewfinder 128. The second camera 137 may be a rear camera of the electronic device 100. In other words, it is located at an opposite side of the electronic device 100 relative to the display or viewfinder 128. Of course, such location relationship is not a must. Any other location relationship between the first camera 136 and the second camera 137 is possible, as long as they may capture images of difference scenes in use. The scope of the present invention is not limited in this aspect.

The electronic device 100 further comprises a battery 134, such as a vibrating battery pack for supplying power to various circuits needed for operating the electronic device 100 and alternatively providing a mechanical vibration as a detectable output. The electronic device 100 may further comprise a user identity module (UIM) 138. The UIM 138 is generally a memory device having an in-built processor. The UIM 138 may, for example, comprise a subscriber identity module (SIM), a universal integrated circuit card (UICC), a universal user identity module (USIM), or a removable user identity module (R-UIM), etc. The UIM 138 may comprise a card connection detecting module according to embodiments of the present invention.

The electronic device 100 further comprises a storage device. For example, the electronic device 100 may comprise a non-volatile memory 140, for example, a non-volatile random access memory (RAM) in a cache area for temporarily storing data. The electronic device 100 may further comprise other non-volatile memory 142 that may be either in-built or removable. The non-volatile memory 142 may additionally or alternatively comprise an EEPROM or a flash memory, etc., as an example. The memory may store any item in a plurality of information segments and data used by the electronic device 100, so as to perform functions of the electronic device 100.

It should be understood that the structural diagram in Fig. 1 is only for the purpose of illustration, not intended to limit the scope of the present invention. In some cases, some components may be added or reduced according to the actual needs.

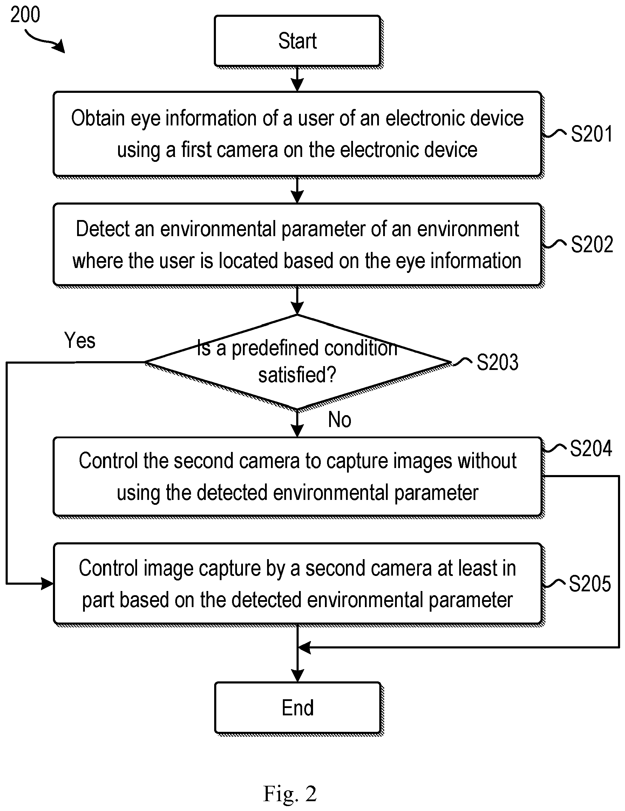

Fig. 2 shows a flow diagram of a method for detecting an environmental parameter for controlling image capture according to exemplar embodiments of the present invention. It would be appreciated that the method 200 may be executed by an electronic device 100 as described above with reference to Fig. 1, e.g., executed by a controller 120. For the sake of discussion, the method 200 will be described below with reference to the electronic device 100 as shown in Fig. 1.

The method 200 starts, in step S201, eye information of a user of an electronic device 100 is obtained using a first camera 136 of the electronic device 100.

According to embodiments of the present invention, the obtaining of the eye information of the user by the first camera 136 may be triggered by various different conditions. For example, in some embodiments, step S201 may be performed in response to detecting that the user is capturing an image using the second camera 137. As an example, when the user captures an image using the second camera 137 by operating a control such as a physical key on the electronic device 100 or a button on or user interface (UI), the controller 120 of the electronic device 100 may detect the action and correspondingly trigger the first camera 136 to obtain the eye information. As mentioned above, according to embodiments of the present invention, the first camera 136 may be a front camera of the electronic device 100, while the second camera 137 may be a rear camera of the electronic device 100. When the user holds up the electronic device 100 to capture an image of a front scene using the first (rear) camera 137, the second (front) camera 136 is just oriented to the user's face and thus can obtain the eye information of the user.

Alternatively or additionally, the step S201 of the method 200 may also be triggered by different events. For example, in some embodiments, once the controller 120 of the electronic device 100 detects that the user has activated a camera program on the electronic device 100 (e.g., by clicking a corresponding icon), it may command the first camera 136 to start detecting the user's eye. Once the first camera 136 detects that the user's eye appears in its field of view, the acquisition of the eye information begins. The first camera 136 may use any currently known or future developed technologies to implement the eye detection, including, but not limited to, an image processing-based algorithm, a model identifying algorithm, and an algorithm based on eyeball optical characteristics. The scope of the present invention is not limited in this aspect. Moreover, it is to be understood that any other trigger conditions for step S201 are possible, and the scope of the present invention is not limited in this aspect.

In some embodiments of the present invention, the eye information detected in step S201 may comprise color of sclera of the user's eye. As known, sclera is substantially a white area in the human eye, and the color of sclera will vary with color temperature in the environment. Therefore, by detecting the color of sclera, the color temperature of the environment where the user is currently located can be detected, while the color temperature may in turn be used to control the second camera 137 in image capture. For example, the color temperature may be used for automatic white balance processing, which will be detailed below. According to embodiments of the present invention, any currently known or future developed technologies may be used to detect the color of sclera in the eye area, including, but not limited to, an image processing technology, a model identifying technology, an optical knowledge-based technology, and the like. The scope of the present invention is not limited in this aspect.

Alternatively or additionally, in some embodiments of the present invention, the eye information detected in step S201 may comprise a ratio of the pupil or iris, for example, with respect to the eyeball area or entire eye area. As known, the pupil ratio of a human eye will vary with the brightness of the illumination in the environment. Therefore, by detecting the pupil ratio, illumination conditions such as brightness of the illumination in the environment where the user is currently located may be detected, while the brightness may in turn be used to control the automatic exposure processing (e.g., adjusting the exposure time) of the second camera during image capturing, which will be discussed below. According to embodiments of the present invention, any currently known or future developed pupil detecting and processing technologies may be used, including, for example, an image processing technology, a mode identifying technology, and an optical knowledge-based technology (for example, the pupil cornea reflection vector approach), and the like. The scope of the present invention is not limited in this aspect.

It should be understood that the sclera color and pupil ratio as described above are only examples of detecting eye information of the user in step S201, not embodiments intended to limit the present invention. In step S201, any alternative or additional eye information that is available for detecting an environmental parameter may be obtained. The scope of the present invention is not limited in this aspect.

Next, the method 200 proceeds to step S202 of detecting an environmental parameter of an environment where the user of the electronic device 100 is located based on the eye information captured by the first camera 136. As discussed above, the environmental parameter may include any parameter that may generate an influence on image capture and/or processing, including, but not limited to, illumination brightness, color temperature, etc.

According to embodiments of the present invention, an association relationship between the eye information detected in step S201 and a corresponding environmental parameter may be pre-defined based on prior knowledge and stored in the electronic device 100. In other words, in step S202, an environmental parameter may be determined from the eye information based on a predefined mapping.

Only for the sake of illustration, sclera color is considered as an example of eye information. Temperatures corresponding to different sclera colors may be pre-measured stored by for example a manufacturer of the electronic device 100 or a provider of a camera program. As an example, in some exemplary embodiments, such association relationship may be stored as a mapping table in the electronic device 100, for example, stored in the non-volatile memory 142. Alternatively, the predefined mapping may be stored at a location independent of the electronic device 100, for example, stored in a server, and may be accessed by the electronic device 100. Similarly, as another example, the association relationships between different pupil ratios and the illumination brightness may also be measured and stored in the mapping table in advance.

In particular, according to some embodiments of the present invention, the mapping table may be directly used. The mapping table may also be updated by the device manufacturer and/or any other service providers. Alternatively or additionally, in some embodiments, a predefined mapping table may be calibrated for a user of the electronic device 100, thereby achieving a more accurate and/or personalized image capture and processing. Exemplary embodiments in this aspect will be detailed below.

The method 200 proceeds to step S203 of determining whether a predefined condition is satisfied. Several examples of a predefined condition will be discussed later. In step S203 if it is determined that the predefined condition is not satisfied (branch "No"), then the method 200 proceeds to step S204 of controlling image capture of the second camera 137 without using the environmental parameter detected by the first camera 136 in step S202. The operation in step S204 is similar to a known solution, which will not be detailed here.

On the contrary, if it is determined in step S203 that the predefined condition is determined to be satisfied (branch "No"), the method 200 proceeds to step S205 of controlling image capture of the second camera 137 of the electronic device 100 at least in part based on the environmental parameter detected in step S202.

Traditionally, during the image capturing process, the second camera 137 only captures and processes the information obtained by itself. With the white balance processing as an example, the second camera 137 will locate white points in the scene, and performs automatic white balance processing when capturing an image using the information provided by the white points. However, when the white points in the target scene are few or even do not exist at all, the automatic balance processing might have a poor effect or even become invalid. Consequently, the quality of the resulting image will be deteriorated.

In contrast, because the sclera of the eye may stably provide a white color as a reference, the color temperature of the environment may be accurately detected by the first camera 136. Through control of the image capture based on the color temperature detected in step S205, embodiments of the present invention can perform automatic white balance processing to the image captured by the second camera 137 more accurately and effectively. Correspondingly, the second camera 137 needn't further perform location and processing of white points.

Similarly, as mentioned above, brightness of the environment may be determined based on the pupil ratio obtained by the first camera 136. In such an embodiment, in step S205, the exposure time of the second camera 137 may be controlled at least in part based on the detected ambient brightness, thereby achieving a more accurate automatic exposure processing. Alternatively or additionally, the detected environmental parameter may also be used to control the sensitivity of the second camera 137, gains of one or more color channels, and the like. It should be noted that the environmental parameter detected in step S202 may be used in the control of the second 137 in any appropriate manner, thereby capturing an image of high quality.

Referring back to step S203 of the method 200, according to embodiments of the present invention, any appropriate predefined condition may be used according to the specific needs and application scenarios to enable the environmental parameter detected by the first camera to be used in image capture of the second camera.

For example, in some embodiments, the predefined condition may be a user input or command. For example, an option may be provided in the settings of the electronic device 100, such that the user may control this option to enable or disable the use of the environmental parameter detected by the first camera during the image capture process of the second camera. In other words, in such an embodiment, responsive to receiving such user selection, it is determined in step S203 that the predefined condition is satisfied.

Alternatively or additionally, in some embodiments, a difference between the environments where the first camera and the second camera are located may be determined, and a comparison between such difference and a predefined threshold may act as the predefined condition in step S203. Specifically, it would be appreciated that during the image capture process of the second camera, the second camera per se will also obtain the information from the shot scene, and such information may also be used for detecting environmental parameters of the environment, such as illumination brightness, color temperature, etc. For the sake of discussion, the environmental parameter detected by the second camera may be referred to as "reference environmental parameter." Then, the reference environmental parameter may be compared with the environmental parameter detected by the first camera in step S202. If the difference therebetween is lower than the predefined threshold, it may be decided in step S203 that the predefined condition is satisfied.

In such an embodiment, by determining the difference between the environmental parameters detected by the first camera and the second camera, respectively, potential deterioration of image quality can be effectively avoided. For example, consider the following situation: a user indoor uses the electronic device 100 to shoot a scene outdoor through a door or a window. In this scenario, what is detected by the first camera facing the user is the indoor environmental parameter, while what is detected by the second camera 137 facing the target scene is an outdoor environmental parameter. If the difference between the indoor and outdoor environments is very large, then the image quality would be deteriorated when the image capture of the second camera 137 is controlled based on the environmental parameter detected by the first camera 136. In this case, according to the above embodiments of the present invention, the electronic device 100 may automatically disable the environmental parameter detected by the first camera 136 during the image capture process of the second camera 137 based on a comparison between the two sets of environmental parameters, thereby avoiding occurrence of the above problem.

It should be understood that what are described above are only several examples of a predefined condition, not intended to limit the scope of the present invention. Any other appropriate predefined conditions are possible. For example, in some embodiments, the predefined condition is set to "null," such that in step S203, the predefined condition is always determined to be satisfied. In other words, at this point, image capture of the second camera is always controlled based on the environmental parameter detected by the first camera.

Please note that the sequence of respective steps in the above described method 200 is only exemplary, not intended to limit the scope of the present invention. For example, as mentioned above, in some embodiments, the predefined condition in step S203 may be indicating an input selected by the user. In this case, step S203 is likely executed first. In other words, in such an embodiment, it will be first determined whether a predefined condition is satisfied, and subsequent steps of the method are only performed when the predefined condition is satisfied. Other alternative sequence is also possible, and the scope of the present invention is not limited in this aspect.

In particular, as mentioned above, in some embodiments, the electronic device 100, for example, may store an association relationship between eye information of the user and a corresponding environmental parameter in a form of a mapping table. Such mapping table may be directly used. Alternatively, considering that eyes of different users likely have a different response to the same environment (e.g., having different sclera colors at the same color temperature), in some embodiments, for a specific user of the electronic 100, the predefined mapping between eye information and environmental parameter may be calibrated.

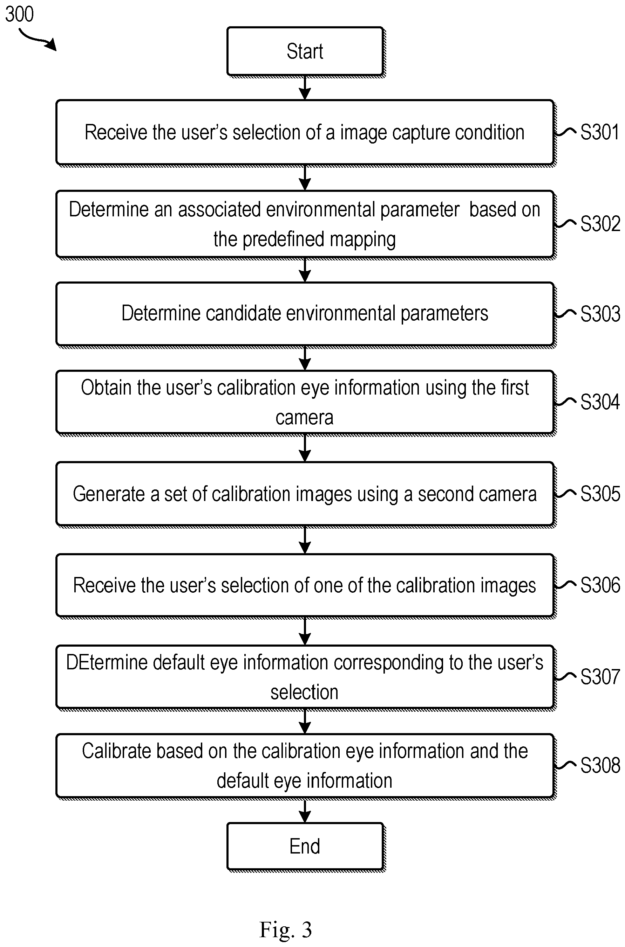

In some embodiments, for example, an auxiliary tool such as a color card may be used to sample the user's eye color at a given condition and correspondingly perform calibration. Alternatively or additionally, in order to enhance calibration efficiency and user-friendly degree, in some embodiments, calibration may be implemented through the following manner. First, receive the user's selection of a calibration image in a set of calibration images, the set of calibration images being captured using different environmental parameters under the same image capture condition. The user's calibration eye information is obtained by the first camera 136. After words, calibration may be implemented based on the user's selection of the calibration image and the calibration eye information. Hereinafter, an exemplary embodiment in this aspect will be described with reference to Fig. 3.

Fig. 3 shows a flow diagram of a method 300 for calibrating a predefined mapping between eye information and an environmental parameter for a specific user according to exemplary embodiments of the present invention. According to the embodiment of the present invention, the method 300 may be performed before the above described method 200. For example, the method 300 may be performed when the user first configures or uses the electronic device 100 or its image capture function, so as to implement calibration for the user.

In the embodiment as shown in Fig. 3, the mapping table records the environmental parameters and corresponding eye information that are associated with each image capture condition in a set of image capture conditions. The image capture conditions may be predefined, e.g., blue sky, cloudy, noon, tungsten, candle light, etc. For each image capture condition, the mapping table indicates an associated environmental parameter and corresponding eye information. Only for the sake of illustration and discussion, an example of color temperature as an environmental parameter is considered. In this case, the corresponding eye information may be sclera color, which may be characterized by a tuple (R/G, B/G), wherein R, G, B represents values of red, green, blue channels of sclera colors, respectively. Therefore, a mapping table may be defined below. (It is to be understood that all the numerical values are only exemplary.)

**Table 1**

| **Shooting condition** | **Color temperature** | **Sclera color information (R/G, B/G)** |
|---|---|---|
| Blue sky | 10000k | (129, 162) |
| Cloudy | 6500k | (161, 130) |
| Noon | 5500k | (175, 123) |
| Tungsten | 3000k | (216, 104) |
| Candle light | 2000k | (264, 95) |

It should be noted that in this mapping table, there might also record values of other environmental parameters and corresponding eye information, and such environmental parameters might not be associated with a specific image capture condition. For example, in the exemplary predefined mapping shown in Table 1, in addition to the color temperature associated with respective predefined image capture conditions, other color temperatures may also be recorded, for example, a color temperature of 6700k and a tuple (R/G, B/G) indicating a corresponding sclera color.

In order to adaptively calibrate the predefined mapping for a user of the electronic device 100, in step S301 of the method 300, the user's selection of a specific image capture condition is received. For the sake of discussion, it is supposed that the user selects the "cloudy" image capture condition.

In step S302, an environmental parameter associated with the image capturing condition selected by the user is determined based on the predefined mapping. In this example, it is the color temperature 6500K which is associated with the image capture condition "cloudy."

Next, in step S303, within a predefined neighborhood of the environmental parameter determined in step S302, a set of candidate environmental parameters are selected. For example, centered with the environmental parameter determined in step S302, sampling may be performed within a predefined range at a given step length to obtain candidate environmental parameters. For example, in the example as discussed, centered with the color temperature 6500k, the sampling may be performed towards two directions at a step length of 200k, respectively, for example. In this way, a set of candidate environmental parameters {6100k, 6300k, 6500k, 6700k, 6900k} may be obtained. It is seen that the candidate environmental parameters include the environmental parameter itself which is determined in step S302. It is to be understood that this example is only for the purpose of illustration, and any other sampling manner is possible as well. The scope of the present invention is not limited in this aspect.

In step S304 of the method 300, the user's eye information is obtained using the first camera 136 of the electronic device 100. In this example, the obtained eye information at least includes a color of sclera. For the sake of discussion, the eye information obtained in step S304 may be referred to as "calibration eye information."

In step S305 which is essentially simultaneous with step S304, the second camera 137 is controlled to capture an image of the target scene based on the each of the candidate environmental parameters as determined in step S303, thereby obtaining a set of images which can be referred to as "calibration images." In other words, each calibration image is an image captured based on a different candidate environment parameter. By way of example, in the example discussed in the above paragraphs, given each color temperature in the candidate temperatures {6100k, 6300k, 6500k, 6700k, 6900k}, the second camera is controlled to apply the respective automatic white balance processing during image capture, thereby obtaining five calibration images.

Next, in step S306, the user's selection of one of the calibration images is received. Specifically, according to embodiments of the present invention, each resulting calibration image may be presented to the user on a user interface (UI) of the electronic device 100, such that the user can select a calibration image that he/she believes to be the one most matching with the current image capture condition. It would be appreciated that the calibration image selected by the user is the image that he/she believes to have the best quality both visually and psychologically. Such selection reflects not only an objective image quality, but also the user's preference to some extent. In this way, while the predefined mapping is calibrated, a personalized customization for a specific user is achieved as well. For the sake of discussion, it is supposed in this example that the user selects a calibration image captured based on the candidate environmental parameter 6700k color temperature.

Then, in step S307, the eye information corresponding to the candidate environmental parameter associated with the calibration image selected by the user is determined. For the sake of discussion, the eye information determined in step S307 may be referred to as "default eye information." For example, in the example as discussed, a sclera color corresponding to the candidate environmental parameter color temperature 6700k may be determined in step S307 as the default eye information.

In some embodiments, it is possible that the default eye information corresponding to the candidate environmental parameter associated with the calibration image selected by the user has already been recorded in the predefined mapping. In this case, in step S307, the default eye information may be directly read out from the predefined mapping. Alternatively, in some other embodiments, the default eye information corresponding to a certain candidate environment parameter might not be recorded in the predefined mapping. In this case, a technology such as interpolation may be used to estimate or calculate the eye information corresponding to the candidate environmental parameter based on nearby known environmental parameters and eye information.

Next, in step S308, the predefined mapping table is calibrated based on the calibration eye information obtained in step S304 and the default eye information determined in step S307. For example, in some embodiments, an offset vector directed from the default eye information to the calibration eye information may be constructed. Then the calibration of the predefined mapping is performed based on the offset vector.

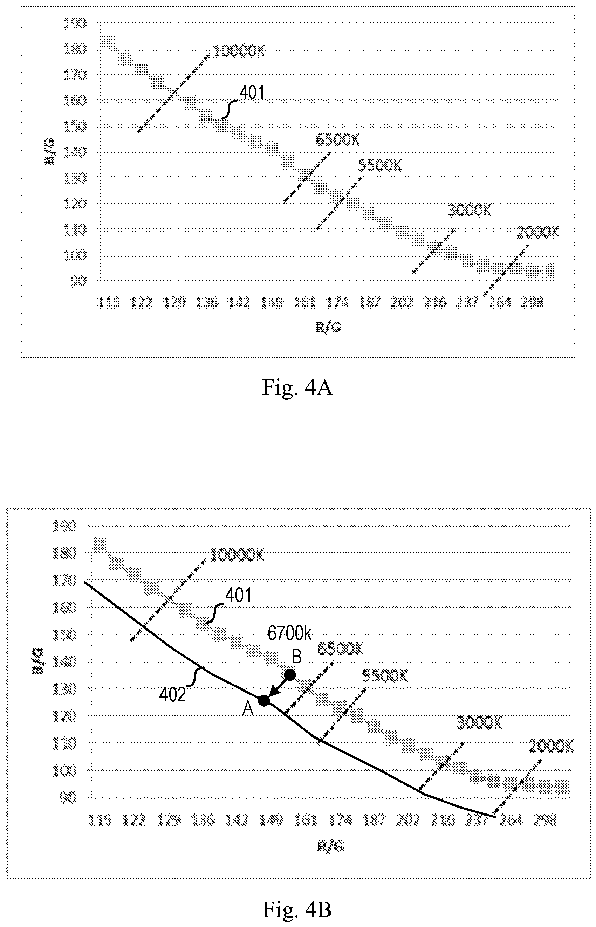

Specifically, in such an embodiment, a coordinate system may be defined using a tuple (R/G, B/G) representing sclera color. For example, R/G may act as a horizontal axis, while B/G acts as a longitudinal axis. In this way, each tuple (R/G, B/G) may represent a point in the coordinate system. Based on the tuple (R/G, B/G) indicated in the predefined mapping, a curve may be obtained through for example a curve fitting technology, which is referred to as "mapping curve." As an example, Fig. 4A shows a mapping curve 401 generated based on the mapping table shown in above Table 1.

The calibration eye information obtained in step S304 defines point A in the coordinate system, while the default eye information obtained at step S307 defines point B on the coordinate system. In particular, as mentioned above, the default eye information is generated based on the predefined mapping; therefore, point B is located on the mapping curve 401. Therefore, the vector directed from point B to point A may be defined as an offset vector. Based on the offset vector, as shown in Fig. 4B, the mapping curve 401 may be translated to obtain an updated mapping curve 402. Then, calibration of the predefined mapping may be completed based on the updated mapping curve 402.

It should be understood that although calibration of the predefined mapping is described with reference to the sclera color and color temperature, such calibration mechanism is likewise applicable to other environment parameter and corresponding eye information, e.g., brightness and pupil ratio.

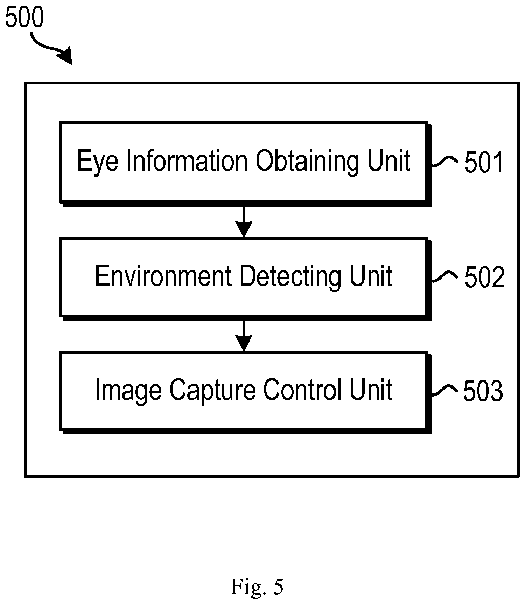

Fig. 5 shows a block diagram of an apparatus 500 for detecting an environmental parameter to control image capture according to exemplary embodiments of the present invention is presented. As shown, according to embodiments of the present invention, the apparatus 500 comprises: an eye information obtaining unit 501 configured to obtain eye information of a user of an electronic device using a first camera on the electronic device; an environment detecting unit 502 configured to detect an environmental parameter of an environment where the user is located based on the eye information obtained by the first camera; and an image capture control unit 503 configured to, responsive to a predefined condition being satisfied, control capture of an image by a second camera on the electronic device at least in part based on the detected environmental parameter, the first camera and the second camera being located at different sides of the electronic device.

In some embodiments, the eye information includes a sclera color, and the environment detecting unit 502 may comprise a color temperature detecting unit configured to detect a color temperature of the environment based on the sclera color.

In some embodiments, the eye information includes a pupil ratio, and the environment detecting unit 502 may comprise a brightness detecting unit configured to detect brightness of illumination in the environment based on the pupil ratio.

In some embodiments, the environment detecting unit 502 may be configured to determine the environmental parameter from the eye information using a predetermined mapping. In such an embodiment, the apparatus 500 may also comprise a calibrating unit configured to calibrate the predefined mapping for the user before using the predefined mapping. In some embodiments, the apparatus 500 further comprises: a user selection receiving unit configured to receive the user's selection of a calibration image from a set of calibration images, where the set of calibration images are captured using different environmental parameters under a same image capture condition; and a calibration eye information obtaining unit configured to obtain calibration eye information of the user using the first camera. In such embodiments, the calibrating unit is configured to calibrate the predefined mapping based on the user's selection of the calibration image and the calibration eye information.

In some embodiments, the predefined mapping at least indicates an environmental parameter and the eye information that are associated with each one in a set of image capture conditions. In such embodiments, the user selection receiving unit comprises: a first receiving unit configured to receive the user's selection of an image capture condition from the set of image capture conditions; an environmental parameter determining unit configured to determine the environmental parameter associated with the selected image capture condition based on the predefined mapping; a candidate parameter selecting unit configured to select a set of candidate environmental parameters within a predefined neighborhood of the environmental parameter; a calibration image generating unit configured to control the second camera to capture an image based on each of the set of candidate environmental parameters to generate a set of calibration images; and a second receiving unit configured to receive the user's selection of the calibration image from the set of calibration images. Accordingly, in such embodiments, the apparatus 500 further comprises a default eye information determining unit configured to determine default eye information corresponding to the candidate environmental parameter associated with the selected calibration image. The calibrating unit is configured to calibrate the predefined mapping based on the calibration eye information and the default eye information.

In some embodiment, the apparatus 500 may also comprise: a reference environment detecting unit configured to detect a reference environmental parameter of the environment based on information obtained by the second camera when capturing the image; an environmental parameter comparing unit configured to compare the environmental parameter detected based on the eye information and the reference environmental parameter; and a first condition determining unit configured to responsive to a difference between the environmental parameter and the reference environment parameter being lower than a predefined threshold, determine that the predefined condition is satisfied.

Alternatively or additionally, in some embodiments, the apparatus 500 may also comprise: a user input receiving unit configured to receive a user input that commands to control the image capture by the second camera based on the environmental parameter; and a second condition determining unit configured to responsive receiving the user input, determine that the predefined condition is satisfied.

In some embodiments, in controlling the image capture by the second camera, the image capture control unit 503 may be configured to control at least one of the following: the exposure time, the sensitivity, the gain of at least one color channel, and the white balance processing.

It should be noted that for the sake of clarity, FIG. 5 does not show some optional units or sub-units included in the apparatus 500. However, it should be noted that respective features as described above with reference to Figs. 1-4 are likely applicable to the apparatus 500, which are therefore not detailed. Moreover, the term "unit" here may be either a hardware module or a software unit module. Correspondingly, the apparatus 500 may be implemented through various manners. For example, in some embodiments, the apparatus may be implemented partially or completely by software and/or firmware, e.g., implemented as a computer program product embodied on a computer readable medium. Alternatively or additionally, the apparatus 500 may be implemented partially or completely based on hardware, e.g., implemented as an integrated circuit (IC), an application-specific integrated circuit (ASIC), a system on chip (SOC), a field programmable gate array (FPGA), and the like. The scope of the present invention is not limited in this aspect.

Only for the illustration purpose, several exemplary embodiments of the present invention have been described above. Embodiments of the present invention may be implemented by hardware, software or a combination of the software and combination. The hardware part may be implemented using a dedicated logic; the software part may be stored in the memory, executed by an appropriate instruction executing system, e.g., a microprocessor or a dedicatedly programmable gate arrays and programmable logic devices, or implemented by various kinds of processor-executable software, or implemented by a combination of the above hardware circuits and software, such as firmware.

It is to be understood that although several units or sub-units of the apparatus have been mentioned in the above detailed description, such division is merely exemplary and not mandatory. In fact, according to embodiments of the present invention, the features and functions of two or more modules described above may be embodied in one module. On the contrary, the features and functions of one module described above may be embodied by a plurality of modules. In addition, although in the accompanying drawings operations of the method of the present invention are described in specific order, it is not required or suggested these operations be necessarily executed in the specific order or the desired result should be achieved by executing all illustrated operations. On the contrary, the steps depicted in the flowcharts may change their execution order. Additionally or alternatively, some steps may be omitted, a plurality of steps may be combined into one step for execution, and/or one step may be decomposed into a plurality of steps for execution.

## Claims

1. A method of detecting an environmental parameter to control image capture, the method comprising:
obtaining eye information of a user of an electronic device (100) using a first camera (136) on the electronic device (100), **characterized in that** the eye information obtained by the first camera (136) includes a sclera color; the method further comprises:
detecting based on the sclera color an environmental parameter of an environment where the user is located based on the eye information obtained by the first camera (136), and which environmental parameter is a color temperature;
detecting a reference environmental parameter of the environment by the second camera (137) from a shot scene, and which reference environmental parameter is a color temperature;
comparing the environmental parameter and the reference environmental parameter, if the difference is lower than a predefined threshold, defining a predefined condition satisfied; and
responsive to the predefined condition being satisfied, controlling capture of an image by a second camera (137) on the electronic device (100) at least in part based on the detected environmental parameter, and responsive to the predefined condition being unsatisfied, disable the environmental parameter detection by the first camera (136) during the image capture process of the second camera (137), the first camera (136) and the second camera (137) being located at different sides of the electronic device (100).

2. The method according to claim 1, wherein detecting the environmental parameter comprises determining the environmental parameter from the eye information using a predetermined mapping.

3. An apparatus for detecting an environmental parameter to control image capture, the apparatus (500) comprising:
an eye information obtaining unit (501) configured to obtain eye information of a user of an electronic device (100) using a first camera (136) on the electronic device (100), **characterized in that** the eye information obtained by the first camera (136) includes a sclera color;
an environment detecting unit (502) configured to detect based on the sclera color an environmental parameter of an environment where the user is located based on the eye information obtained by the first camera (136), and which environmental parameter is a color temperature;
a second camera (137) configured to detect a reference environmental parameter of the environment from a shot scene, and which reference environmental parameter is a color temperature;
an environmental parameter comparing unit configured to compare the environmental parameter and the reference environmental parameter, if the difference is lower than a predefined threshold, defining a predefined condition satisfied, and
an image capture control unit (503) configured to, if a predefined condition is defined to be satisfied by comparing the environmental parameter and the reference environmental parameter, control capture of an image by a second camera (137) on the electronic device (100) at least in part based on the detected environmental parameter, the first camera (136), and if a predefined condition is defined to be unsatisfied, disable the environmental parameter detection by the first camera (136) during the image capture process of the second camera (137), the first camera (136) and the second camera (137) being located at different sides of the electronic device (100).

4. The apparatus according to claim 3, wherein the environment detecting unit is configured to determine the environmental parameter from the eye information using a predetermined mapping.

5. The apparatus according to claim 4, further comprising:
a calibrating unit configured to calibrate the predefined mapping for the user before using the predefined mapping.

6. The apparatus according to claim 5, further comprising:
a user selection receiving unit configured to receive the user's selection of a calibration image from a set of calibration images, the set of calibration images being captured using different environmental parameters under a same image capture condition; and
a calibration eye information obtaining unit configured to obtain calibration eye information of the user using the first camera (136),
the calibrating unit being configured to calibrate the predefined mapping based on the user's selection of the calibration image and the calibration eye information.

7. The apparatus according to claim 6, wherein the predefined mapping at least indicates an environmental parameter and eye information that are associated with each of a set of image capture conditions,
wherein the user selection receiving unit comprises:
a first receiving unit configured to receive the user's selection of an image capture condition from the set of image capture conditions;
an environmental parameter determining unit configured to determine the environmental parameter associated with the selected image capture condition based on the predefined mapping;
a candidate parameter selecting unit configured to select a set of candidate environmental parameters within a predefined neighborhood of the environmental parameter;
a calibration image generating unit configured to control the second camera (137) to capture an image based on each of the set of candidate environmental parameters to generate a set of calibration images; and
a second receiving unit configured to receive the user's selection of the calibration image from the set of calibration images,
wherein the apparatus further comprises a default eye information determining unit configured to determine default eye information corresponding to the candidate environmental parameter associated with the selected calibration image,
and wherein the calibrating unit is configured to calibrate the predefined mapping based on the calibration eye information and the default eye information.

8. The apparatus according to any one of claims 3 to 7, wherein the eye information further includes a pupil ratio with respect to the eyeball area or entire eye area, and wherein the environment detecting unit may comprise a brightness detecting unit configured to detect brightness of illumination in the environment based on the pupil ratio.

9. The apparatus according to claims 3-7, further comprising:
a user input receiving unit configured to receive a user input that commands to control the capture of the image by the second camera (137) based on the environmental parameter; and
a second condition determining unit configured to responsive to receiving the user input, determine that the predefined condition is satisfied.

10. The apparatus according to any one of claims 3 to 9, wherein the image capture control unit (503) is configured to control at least one of:
exposure time;
sensitivity;
a gain of at least one color channel; and
white balance processing.

11. A computer program product for detecting an environmental parameter to control image capture, the computer program product being tangibly stored on a non-transient computer readable medium and including a machine executable instruction, the machine executable instruction, when being executed, causing the apparatus of claim 3 to perform steps of the method according to claim 1 or 2.

## Patentansprüche

1. Verfahren zum Detektieren eines Umgebungsparameters zum Steuern einer Bilderfassung, wobei das Verfahren Folgendes umfasst:
Erhalten von Augeninformationen eines Benutzers einer elektronischen Vorrichtung (100) unter Verwendung einer ersten Kamera an der elektronischen Vorrichtung (100), **dadurch gekennzeichnet, dass** die Augeninformationen, die von der ersten Kamera (136) erhalten werden, eine Sklerafarbe beinhalten; wobei das Verfahren ferner Folgendes umfasst:
Detektieren auf Basis der Sklerafarbe eines Umgebungsparameters einer Umgebung, in der sich der Benutzer befindet, auf Basis der Augeninformationen, die von der ersten Kamera (136) erhalten werden, und wobei der Umgebungsparameter eine Farbtemperatur ist;
Detektieren eines Umgebungsreferenzparameters der Umgebung in einer aufgenommenen Szene durch die zweite Kamera (137), und wobei der Umgebungsreferenzparameter eine Farbtemperatur ist;
Vergleichen des Umgebungsparameters und des Umgebungsreferenzparameters, wenn der Unterschied geringer ist als ein vordefinierter Schwellwert, Definieren, dass eine vordefinierte Bedingung erfüllt ist; und
in Reaktion darauf, dass die vordefinierte Bedingung erfüllt ist, Steuern der Erfassung eines Bildes durch eine zweite Kamera (137) an der elektronischen Vorrichtung (100) mindestens teilweise auf Basis des detektierten Umgebungsparameters und in Reaktion darauf, dass die vordefinierte Bedingung nicht erfüllt ist, Deaktivieren der Umgebungsparameterdetektion durch die erste Kamera (136) während des Bilderfassungsprozesses der zweiten Kamera (137), wobei sich die erste Kamera (136) und die zweite Kamera (137) auf unterschiedlichen Seiten der elektronischen Vorrichtung (100) befinden.

2. Verfahren nach Anspruch 1, wobei das Detektieren des Umgebungsparameters das Bestimmen des Umgebungsparameters anhand der Augeninformationen unter Verwendung einer vorbestimmten Zuordnung umfasst.

3. Einrichtung zum Detektieren eines Umgebungsparameters zum Steuern einer Bilderfassung, wobei die Einrichtung (500) Folgendes umfasst:
eine Augeninformationserhaltungseinheit (501), die dazu ausgelegt ist, unter Verwendung einer ersten Kamera (136) an einer elektronischen Vorrichtung (100) Augeninformationen eines Benutzers der elektronischen Vorrichtung (100) zu erhalten, **dadurch gekennzeichnet, dass** die Augeninformationen, die von der ersten Kamera (136) erhalten werden, eine Sklerafarbe beinhalten;
eine Umgebungsdetektionseinheit (502), die dazu ausgelegt ist, auf Basis der Sklerafarbe eines Umgebungsparameters eine Umgebung, in der sich der Benutzer befindet, auf Basis der Augeninformationen, die von der ersten Kamera (136) erhalten werden, zu detektieren, und wobei der Umgebungsparameter eine Farbtemperatur ist;
eine zweite Kamera (137), die dazu ausgelegt ist, einen Umgebungsreferenzparameter der Umgebung in einer aufgenommenen Szene zu detektieren, und wobei der Umgebungsreferenzparameter eine Farbtemperatur ist;
eine Umgebungsparametervergleichseinheit, die dazu ausgelegt ist, den Umgebungsparameter und den Umgebungsreferenzparameter zu vergleichen, wenn der Unterschied geringer ist als ein vordefinierter Schwellwert, Definieren, dass eine vordefinierte Bedingung erfüllt ist; und
eine Bilderfassungssteuereinheit (503), die dazu ausgelegt ist, wenn durch Vergleichen des Umgebungsparameters und des Umgebungsreferenzparameters definiert ist, dass eine vordefinierte Bedingung erfüllt ist, die Erfassung eines Bildes durch eine zweite Kamera (137) an der elektronischen Vorrichtung (100) mindestens teilweise auf Basis des detektierten Umgebungsparameters zu steuern, und wenn definiert ist, dass eine vordefinierte Bedingung nicht erfüllt ist, die Umgebungsparameterdetektion durch die erste Kamera (136) während des Bilderfassungsprozesses der zweiten Kamera (137) zu deaktivieren, wobei sich die erste Kamera (136) und die zweite Kamera (137) auf unterschiedlichen Seiten der elektronischen Vorrichtung (100) befinden.

4. Einrichtung nach Anspruch 3, wobei die Umgebungsdetektionseinheit dazu ausgelegt ist, den Umgebungsparameter unter Verwendung einer vorbestimmten Zuordnung anhand der Augeninformationen zu bestimmen.

5. Einrichtung nach Anspruch 4, die ferner Folgendes umfasst:
eine Kalibriereinheit, die dazu ausgelegt ist, die vordefinierte Zuordnung für den Benutzer zu kalibrieren, bevor die vordefinierte Zuordnung verwendet wird.

6. Einrichtung nach Anspruch 5, die ferner Folgendes umfasst:
eine Benutzerauswahlempfangseinheit, die dazu ausgelegt ist, die Auswahl eines Kalibrierbildes aus einem Satz von Kalibrierbildern durch den Benutzer zu empfangen, wobei der Satz von Kalibrierbildern unter Verwendung von unterschiedlichen Umgebungsparametern unter einer selben Bilderfassungsbedingung erfasst werden; und
eine Kalibrieraugeninformationserhaltungseinheit, die dazu ausgelegt ist, Kalibriereaugeninformationen des Benutzers unter Verwendung der ersten Kamera (136) zu erhalten,
wobei die Kalibriereinheit dazu ausgelegt ist, die vordefinierte Zuordnung auf Basis der Auswahl des Kalibrierbildes durch den Benutzer und der Kalibriereaugeninformationen zu kalibrieren.

7. Einrichtung nach Anspruch 6, wobei die vordefinierte Zuordnung mindestens einen Umgebungsparameter und Augeninformationen anzeigt, die mit jeder eines Satzes von Bilderfassungsbedingungen verknüpft sind,
wobei die Benutzerauswahlempfangseinheit Folgendes umfasst:
eine erste Empfangseinheit, die dazu ausgelegt ist, die Auswahl einer Bilderfassungsbedingung aus dem Satz von Bilderfassungsbedingungen durch den Benutzer zu empfangen;
eine Umgebungsparameterbestimmungseinheit, die dazu ausgelegt ist, den Umgebungsparameter, der mit der ausgewählten Bilderfassungsbedingung verknüpft ist, auf Basis der vordefinierten Zuordnung zu bestimmen;
eine Parameterkandidatenauswahleinheit, die dazu ausgelegt ist, einen Satz von Umgebungsparameterkandidaten in einer vordefinierten Nachbarschaft des Umgebungsparameters auszuwählen;
eine Kalibrierbilderzeugungseinheit, die dazu ausgelegt ist, die zweite Kamera (137) zu steuern, um auf Basis von jedem des Satzes von Umgebungsparameterkandidaten ein Bild zu erfassen, um einen Satz von Kalibrierbildern zu erzeugen; und
eine zweite Empfangseinheit, die dazu ausgelegt ist, die Auswahl des Kalibrierbildes aus dem Satz von Kalibrierbildern durch den Benutzer zu empfangen,
wobei die Einrichtung ferner eine Standardaugeninformationsbestimmungseinheit umfasst, die dazu ausgelegt ist, Standardaugeninformationen, die dem Umgebungsparameterkandidaten entsprechen, der mit dem ausgewählten Kalibrierbild verknüpft ist, zu bestimmen,
und wobei die Kalibriereinheit dazu ausgelegt ist, die vordefinierte Zuordnung auf Basis der Kalibriereaugeninformationen und der Standardaugeninformationen zu kalibrieren.

8. Einrichtung nach einem der Ansprüche 3 bis 7, wobei die Augeninformationen ferner ein Pupillenverhältnis mit Bezug auf den Augapfelbereich oder den gesamten Augenbereich beinhalten und wobei die Umgebungsdetektionseinheit eine Helligkeitsdetektionseinheit umfassen kann, die dazu ausgelegt ist, auf Basis des Pupillenverhältnisses eine Helligkeit der Beleuchtung in der Umgebung zu detektieren.

9. Einrichtung nach den Ansprüchen 3 bis 7, die ferner Folgendes umfasst:
eine Benutzereingabeempfangseinheit, die dazu ausgelegt ist, eine Benutzereingabe, die das Steuern der Erfassung des Bildes durch die zweite Kamera (137) auf Basis des Umgebungsparameters anweist, zu empfangen; und
eine zweite Bedingungsbestimmungseinheit, die dazu ausgelegt ist, in Reaktion auf das Empfangen der Benutzereingabe zu bestimmen, dass die vordefinierte Bedingung erfüllt ist.

10. Einrichtung nach einem der Ansprüche 3 bis 9, wobei die Bilderfassungssteuereinheit (503) dazu ausgelegt ist, mindestens eines von Folgendem zu steuern:
Belichtungszeit;
Empfindlichkeit;
eine Verstärkung von mindestens einem Farbkanal; und
Weißabgleichverarbeitung.

11. Computerprogrammprodukt zum Detektieren eines Umgebungsparameters zum Steuern einer Bilderfassung, wobei das Computerprogrammprodukt greifbar auf einem nichttransitorischen computerlesbaren Medium gespeichert ist und eine maschinenausführbare Anweisung beinhaltet, wobei die maschinenausführbare Anweisung, wenn sie ausgeführt wird, die Einrichtung von Anspruch 3 veranlasst, Schritte des Verfahrens nach Anspruch 1 oder 2 durchzuführen.

## Revendications

1. Procédé de détection d'un paramètre environnemental pour commander une capture d'image, le procédé comprenant :
l'obtention d'informations oculaires d'un utilisateur d'un dispositif électronique (100) en utilisant une première caméra (136) sur le dispositif électronique (100), **caractérisé en ce que** les informations oculaires obtenues par la première caméra (136) comportent une couleur sclérotique ; le procédé comprend en outre :
la détection, sur la base de la couleur sclérotique, d'un paramètre environnemental d'un environnement dans lequel se trouve l'utilisateur sur la base des informations oculaires obtenues par la première caméra (136), et lequel paramètre environnemental est une température de couleur ;
la détection d'un paramètre environnemental de référence de l'environnement par la deuxième caméra (137) à partir d'un plan de scène, et lequel paramètre environnemental de référence est une température de couleur ;
la comparaison du paramètre environnemental et du paramètre environnemental de référence, la différence définissant, si elle est inférieure à un seuil prédéfini, une condition prédéfinie satisfaite ; et
en réponse à la satisfaction de la condition prédéfinie, la commande d'une capture d'une image par une deuxième caméra (137) sur le dispositif électronique (100), en se basant au moins en partie sur le paramètre environnemental détecté, et en réponse à la non satisfaction de la condition prédéfinie, la désactivation de la détection de paramètre environnemental par la première caméra (136) pendant le processus de capture d'image de la deuxième caméra (137), la première caméra (136) et la deuxième caméra (137) étant situées sur des côtés différents du dispositif électronique (100).

2. Procédé selon la revendication 1, dans lequel la détection du paramètre environnemental comprend la détermination du paramètre environnemental à partir des informations oculaires en utilisant une mise en correspondance prédéterminée.

3. Appareil pour détecter un paramètre environnemental pour commander une capture d'image, l'appareil (500) comprenant :
une unité d'obtention d'informations oculaires (501) configurée pour obtenir des informations oculaires d'un utilisateur d'un dispositif électronique (100) en utilisant une première caméra (136) sur le dispositif électronique (100), **caractérisé en ce que** les informations oculaires obtenues par la première caméra (136) comportent une couleur sclérotique ;
une unité de détection d'environnement (502) configurée pour détecter, sur la base de la couleur sclérotique, un paramètre environnemental d'un environnement dans lequel se trouve l'utilisateur sur la base des informations oculaires obtenues par la première caméra (136), et lequel paramètre environnemental est une température de couleur ;
une deuxième caméra (137) configurée pour détecter un paramètre environnemental de référence de l'environnement à partir d'un plan de scène, et lequel paramètre environnemental de référence est une température de couleur ;
une unité de comparaison de paramètre environnemental configurée pour comparer le paramètre environnemental et le paramètre environnemental de référence, la différence définissant, si elle est inférieure à un seuil prédéfini, une condition prédéfinie satisfaite, et
une unité de commande de capture d'image (503) configurée, si une condition prédéfinie est définie comme étant satisfaite par la comparaison du paramètre environnemental et du paramètre environnemental de référence, pour commander une capture d'une image par une deuxième caméra (137) sur le dispositif électronique (100), en se basant au moins en partie sur le paramètre environnemental détecté, et si une condition prédéfinie est définie comme étant non satisfaite, pour désactiver la détection de paramètre environnemental par la première caméra (136) pendant le processus de capture d'image de la deuxième caméra (137), la première caméra (136) et la deuxième caméra (137) étant situées sur des côtés différents du dispositif électronique (100).

4. Appareil selon la revendication 3, dans lequel l'unité de détection d'environnement est configurée pour déterminer le paramètre environnemental à partir des informations oculaires en utilisant une mise en correspondance prédéterminée.

5. Appareil selon la revendication 4, comprenant en outre :
une unité d'étalonnage configurée pour étalonner la mise en correspondance prédéfinie pour l'utilisateur avant d'utiliser la mise en correspondance prédéfinie.

6. Appareil selon la revendication 5, comprenant en outre :
une unité de réception de sélection d'utilisateur configurée pour recevoir la sélection par l'utilisateur d'une image d'étalonnage dans un ensemble d'images d'étalonnage, l'ensemble d'images d'étalonnage étant capturé en utilisant différents paramètres environnementaux dans une même condition de capture d'image ; et
une unité d'obtention d'informations oculaires d'étalonnage configurée pour obtenir des informations oculaires d'étalonnage de l'utilisateur en utilisant la première caméra (136),
l'unité d'étalonnage étant configurée pour étalonner la mise en correspondance prédéfinie sur la base de la sélection par l'utilisateur de l'image d'étalonnage et des informations oculaires d'étalonnage.

7. Appareil selon la revendication 6, dans lequel la mise en correspondance prédéfinie indique au moins un paramètre environnemental et des informations oculaires qui sont associés à chacune d'un ensemble de conditions de capture d'image,
dans lequel l'unité de réception de sélection d'utilisateur comprend :
une première unité de réception configurée pour recevoir la sélection par l'utilisateur d'une condition de capture d'image dans l'ensemble de conditions de capture d'image ;
une unité de détermination de paramètre environnemental configurée pour déterminer le paramètre environnemental associé à la condition de capture d'image sélectionnée sur la base de la mise en correspondance prédéfinie ;
une unité de sélection de paramètre candidat configurée pour sélectionner un ensemble de paramètres environnementaux candidats dans un voisinage prédéfini du paramètre environnemental ;
une unité de génération d'image d'étalonnage configurée pour commander la deuxième caméra (137) pour capturer une image sur la base de chacun de l'ensemble de paramètres environnementaux candidats pour générer un ensemble d'images d'étalonnage ; et
une deuxième unité de réception configurée pour recevoir la sélection par l'utilisateur de l'image d'étalonnage dans l'ensemble d'images d'étalonnage,
dans lequel l'appareil comprend en outre une unité de détermination d'informations oculaires par défaut configurée pour déterminer des informations oculaires par défaut correspondant au paramètre candidat environnemental associé à l'image d'étalonnage sélectionnée,
et dans lequel l'unité d'étalonnage est configurée pour étalonner la mise en correspondance prédéfinie sur la base des informations oculaires d'étalonnage et des informations oculaires par défaut.

8. Appareil selon l'une quelconque des revendications 3 à 7, dans lequel les informations oculaires comportent en outre un rapport de pupille par rapport à la zone du globe oculaire ou à la zone oculaire entière, et dans lequel l'unité de détection d'environnement peut comprendre une unité de détection de luminosité configurée pour détecter une luminosité de l'éclairage dans l'environnement sur la base du rapport de pupille.

9. Appareil selon les revendications 3 à 7, comprenant en outre :
une unité de réception d'entrée utilisateur configurée pour recevoir une entrée utilisateur qui ordonne de commander la capture de l'image par la deuxième caméra (137) sur la base du paramètre environnemental ; et
une deuxième unité de détermination de condition configurée, en réponse à la réception de l'entrée utilisateur, déterminer que la condition prédéfinie est satisfaite.

10. Appareil selon l'une quelconque des revendications 3 à 9, dans lequel l'unité de commande de capture d'image (503) est configurée pour commander au moins l'un parmi :
un temps d'exposition ;
une sensibilité ;
un gain d'au moins un canal de couleur ; et
un traitement de la balance des blancs.

11. Produit de programme informatique pour détecter un paramètre environnemental pour commander une capture d'image, le produit de programme informatique étant stocké de manière tangible sur un support non transitoire lisible par ordinateur et comportant une instruction exécutable par machine, l'instruction exécutable par machine, lorsqu'elle est exécutée, amenant l'appareil de la revendication 3 à réaliser les étapes du procédé selon la revendication 1 ou 2.
